# EUROPEAN PATENT APPLICATION

(11) **EP 3 392 068 A1**
(43) Date of publication of application: **24.10.2018**
(21) Application number: 17166772.8
(22) Date of filing: 18.04.2017
(51) Int. Cl.: B60G 3/20, B60G 7/00, B64C 37/00, B60F 5/02

(54) **SUSPENSION SYSTEM**

(71) Applicant: AeroMobil R&D, s. r. o., 82106 Bratislava-mestska cast Podunajske Biskupice (SK)
(72) Inventor: MACANDREW, Doug, 841 06 Bystrica (SK); RANDLE, Steve, Warwick, CV34 6UW (GB); SNAPE, Jan, Warwick, CV34 6UW (GB)
(74) Representative: Finnegan Europe LLP

(57) **Abstract**

A wheel suspension system for mounting a wheel on a vehicle body, such as a flying car, the system comprising: an upright assembly for mounting the wheel; a lower arm assembly comprising: a lower control arm; and a storage arm; a mounting structure connecting the lower arm assembly to the upright assembly; an upper control arm; and an adjustable suspension assembly pivotally connected to the upright assembly or lower control arm assembly and pivotally connected to the body; wherein one end of the lower control arm is pivotally connected to the body, and the other end of the lower control arm is connected to the mounting structure to be pivotable about a first axis; the mounting structure is connected to the upright assembly to be pivotable about a second axis that is substantially perpendicular to the first axis; the storage arm is pivotally connected to the lower control arm at one end, and is moveably connected to the body under control of an actuator at the other end; and the upper control arm having a pivot connection to an upper part of the upright assembly at one and, and a pivot connection to the body at the other end; and wherein the lateral position of the upright assembly with respect to the body is adjustable by movement of the actuator of the storage arm with respect to the body, and the vertical position of the upright assembly with respect to the body is adjustable by operation of the adjustable suspension assembly.

## Description

This invention relates to vehicles that are configurable for air use (flying) and road use (driving). Such vehicles are commonly known as flying cars or roadable aircraft (hereafter "flying cars"). In particular, the invention relates to a configurable light unit that can be deployed in different positions for road use and air use.

There have been a number of previous proposals for flying car designs, i.e. vehicles that can be fully compliant with legal and practical requirements for both road and flight use. Examples include the Terrafugia Transition (WO 2007/114877), the Carplane (http://carplane.de/), the AeroMobil (WO 2013/032409), and the Moller Skycar (http://moller.com/).

Suspension systems for flying cars may be required to meet a number of requirements, including a relatively large vertical travel range, distinct ride height configurations for road use and take-off or landing, further vertical and lateral retraction for in-flight drag reduction, an ability to cope with significant vertical input on heavy landings, the provision of front wheel drive, sufficient steering lock to minimise turning circle, limited space availability, and a wheel fairing that moves with the wheel in bump and lateral retraction travel, but not in steer motion.

This invention aims to address or mitigate some or all of these issues.

A first aspect of the invention provides a wheel suspension system for mounting a wheel on a vehicle body, the system comprising: an upright assembly for mounting the wheel; a lower arm assembly comprising: a lower control arm; and a storage arm; a mounting structure connecting the lower arm assembly to the upright assembly; an upper control arm; and an adjustable suspension assembly pivotally connected to the upright assembly or lower control arm assembly and pivotally connected to the body; wherein one end of the lower control arm is pivotally connected to the body, and the other end of the lower control arm is connected to the mounting structure to be pivotable about a first axis; the mounting structure is connected to the upright assembly to be pivotable about a second axis that is substantially perpendicular to the first axis; the storage arm is pivotally connected to the lower control arm at one end, and is moveably connected to the body under control of an actuator at the other end; and the upper control arm having a pivot connection to an upper part of the upright assembly at one and, and a pivot connection to the body at the other end; and wherein the lateral position of the upright assembly with respect to the body is adjustable by movement of the actuator of the storage arm with respect to the body, and the vertical position of the upright assembly with respect to the body is adjustable by operation of the adjustable suspension assembly.

The upright assembly can comprise a steerable upright on which the wheel is mounted, and a secondary upright, the steerable upright being pivotally mounted on the secondary upright. Alternatively, the secondary upright can be omitted, the mounting structure being connected to the steerable upright.

The storage arm can be pivotally connected to the lower control arm at one end, and has a slideable pivot connection to the body at the other end, the slideable pivot connection being moveable longitudinally with respect to the body; and wherein the lateral position of the upright assembly with respect to the body is adjustable by movement of the slideable pivot connection of the storage arm with respect to the body

The slideable pivot connection can comprise a rail connected to the body extending in a longitudinal direction, and a carriage slideably mounted on the rail and providing the pivot connection for the stowage arm, and an actuator for moving the carriage along the rail. The rail can extend ahead of the wheel on the body.

The adjustable suspension assembly can comprise a pushrod and an adjustable spring and damper connected between the pushrod and the body. The assembly can further comprise a rocker pivotally connected to the body, the adjustable spring and damper being connected on one side of the rocker, and the pushrod being connected on an opposite side of the rocker. Alternatively, the spring and damper may connect direclty to the secondary upright or to the lower control arm assembly. A latching mechanism can be provided on the rocker for holding the upright assembly in a fixed position with respect to the body.

The upright assembly can be moveable between a first position that is laterally extended with respect to the body and vertically lowered with respect to the body, and a second position is laterally retracted with respect to the body and vertically raised with respect to the body; wherein, when the upright assembly is in the first position, the lower arm assembly is in a first configuration in which the slideable pivot connection is closer to the pivot connection of the lower control arm, and the pushrod is extended, and when the upright assembly is in the second position, the lower arm assembly is in a second configuration in which the slideable pivot connection is further from the pivot connection of the lower control arm, and the pushrod is retracted. The upright assembly can also be moveable to an intermediate position between the first and second positions.

In another embodiment, the storage arm comprises an inner part and an outer part connected by means of a hinge, the inner part including a connection to an actuator rod of an actuator mechanims; wherein operation of the actuator mechanism to a first position holds the arm in a straight configuration to exented the upright assembly laterally from the body, and operation of the actuator mechanism to a second position flods the storage arm to move the upright aseembly laterally towards the vehicle body.

A second aspect provides vehicle configurable for air or road use, comprising: a body; a pair of road wheels located on either side of a front region of the body, each wheel being mounted on the body by means of a suspension system according to the first aspect and moveable between a first configuration in which the wheels are positioned close to the body for air use, and a second configuration in which the wheels are extended laterally from the body for supporting the body when configured for road use, the spacing between the wheels being greater in the second configuration than in the first configuration.

The vehicle can further comprise foldable wings that are moveable between an extended position for air use, and a retracted position for road use.

The vehicle can further comprise one or more drive motors connected to provide traction drive to the wheels, wherein the one or more drive motors are connected to the wheels by means of drive shaft extending through the upright assemblies.

The suspension system can be configurable into any of: a first position in which the wheels are laterally extended with respect to the body and vertically lowered with respect to the body to place the vehicle in an attitude for take off or landing, an intermediate position in which the wheels are laterally extended with respect to the body and vertically lowered with respect to the body to place the vehicle in an attitude for road use; and a second position in which the wheels are laterally retracted with respect to the body and vertically raised with respect to the body for air use.

Further variations can be made within the scope of the invention.
Figure 1 shows a front perspective view of a flying car in a flight configuration;
Figure 2 shows a front perspective view of a flying car in a road use configuration;
Figure 3 shows one view of an embodiment of the suspension system;
Figure 4 shows a different view of the embodiment of Figure 3 with parts omitted;
Figures 5, 6, and 7 show further views of the embodiment of Figure 3 with parts omitted;
Figures 8 and 9 show detail of the mounting structure of the embodiment of Figure 3;
Figures 10 - 14 show the configuration of the embodiment of Figure 3 in different lateral positions;
Figures 15 - 20 show the configuration of the embodiment of Figure 3 in different vertical positions;
Figure 21 show detail of the steering connections of the embodiment of Figure 3;

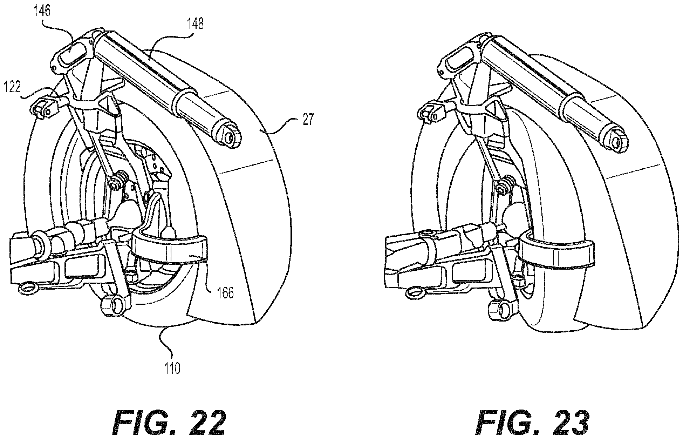

Figures 22 and 23 show details of the mounting of the fairing in the embodiment of Figure 3;
Figures 24 and 25 show an alternative embodiment of the stowage arm.

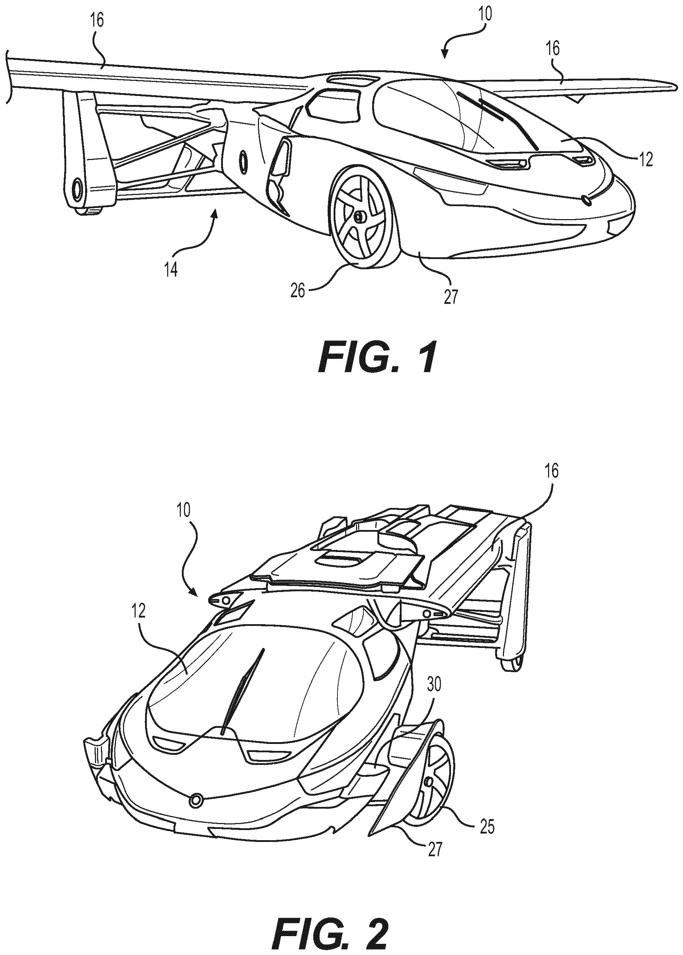

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16 for providing lift and control (via ailerons, not shown) are mounted at the top of the body 10 immediately behind the crew compartment 12. The wings 16 can be moved between an extended position for flight use (Figure 1), and a folded position for road use (Figure 2). In the folded position, the wings lie along the top of the body 10, the long axis of the wings lying substantially parallel to the long axis of the body 10. The folding mechanism is substantially as described in WO 2013/03240.

Front wheels 26 are mounted on the body structure 10. The front wheels are both steerable and driven. Each wheel 26 has an associated fairing 27. In addition, the front wheels 26 and fairing 27 can be moved between a retracted position (Figure 1) in which they are positioned close to the body 10, the fairing 27 fitting closely with the outer surface of the body 10, to reduce drag in flight; and an open position (Figure 2) in which they are positioned for improved traction and control for road use. In the open position, the fairing 27 can be positioned with respect to the wheels 26 so as to comply with road use regulatory requirements with regard to exposure of the wheels. It is also possible to include marker lights and direction indicator repeaters on the fairing 27.

The suspension system by which the wheels are mounted on the body both provides normal suspension function in road use, and a mechanism by which the wheels can be retracted to reduce drag in flight use, and extended for landing and road use, as is described in further detail below.

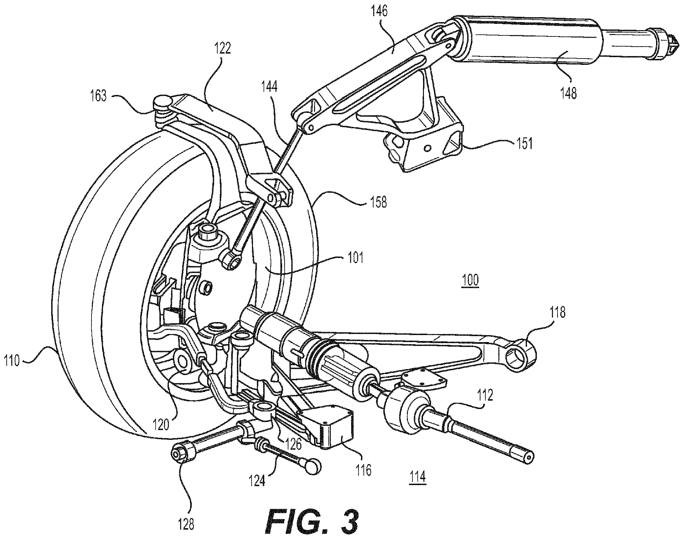

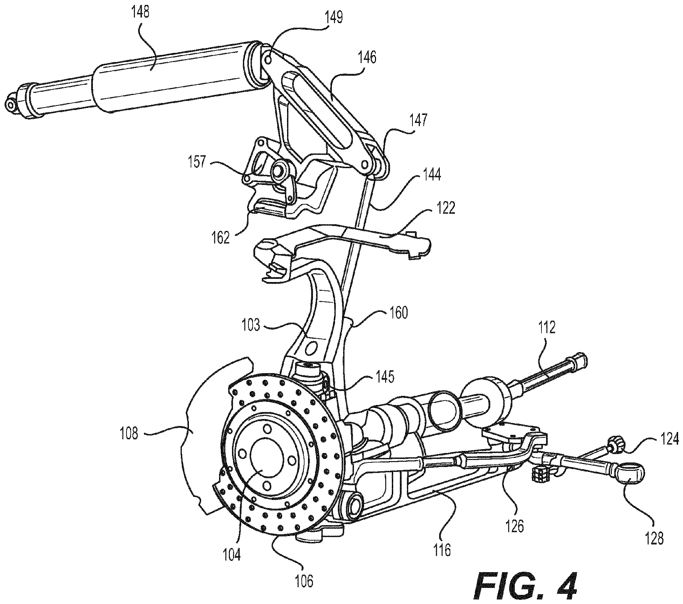

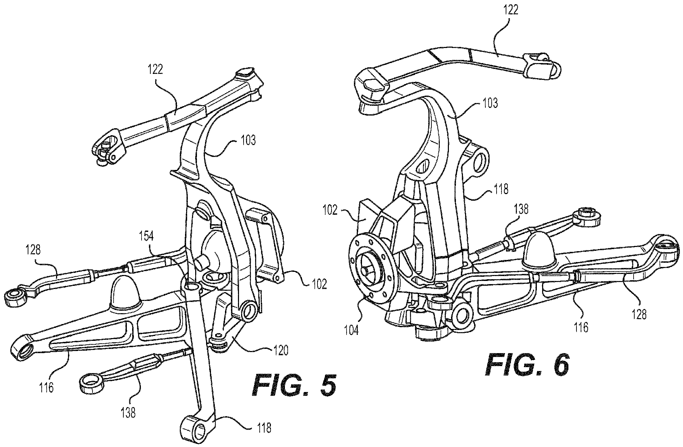

Figures 3 - 6 show the main components of an example of the suspension system. The system 100 shown in Figures 3 - 6 comprises an upright assembly 101 comprising a steerable upright 102 and a secondary upright 103. A wheel hub 104, brake disc 106 and calliper 108, and wheel and tyre 110 are mounted on the steerable upright 102. A drive shaft 112 connects to the hub 104 though the upright assembly 101. A lower arm assembly 114, comprising a lower control arm 116 and a storage arm 118, is connected to the lower part of the secondary upright 103 via a mounting structure 120. An upper control arm 122 is connected to an upper part of the secondary upright 103. A steering mechanism comprising a link 124, track rod 126, and steering idler 128 provide a connection between a steering rack (not shown) and the steerable upright 102. A wheel fairing (27 described in Figures 1 and 2) can be mounted on the secondary upright 103.

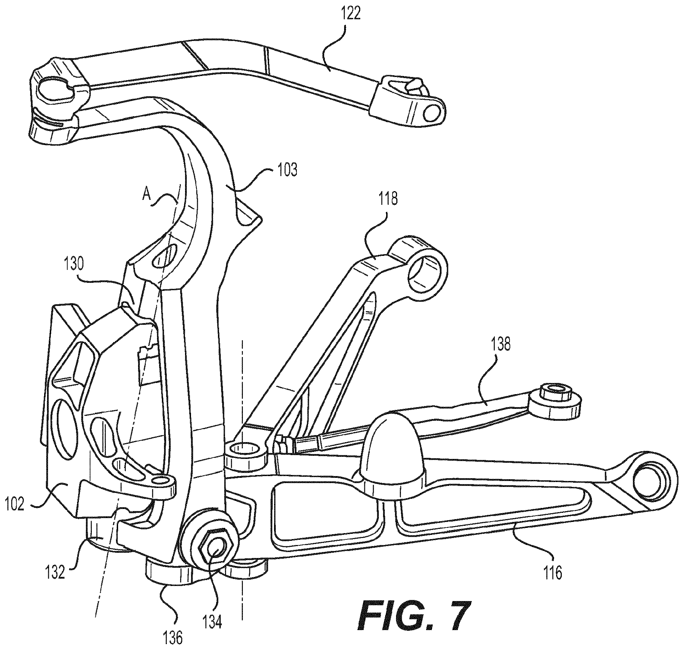

As is described briefly above, the upright assembly 101 comprises two suspension uprights 102, 103. In order to allow the road wheel 110 to steer independently of the wheel fairing 27, while moving in concert with it in bump and lateral retraction, the hub 104, brake disc 106, and wheel and tyre assembly 110 is attached to the steerable upright 102 via a conventional wheel bearing The steerable upright 102 is pivotally jointed to the secondary upright 103 via an upper spherical joint 130 and a lower cylindrical joint 132, which together act to define the steer axis A-A of the system as is shown in Figure 7.

The secondary upright 103 can be controlled to provide bump and lateral retraction travel relative to the vehicle body, while remaining substantially aligned with the vehicle body in the steer (vertical axis rotation) sense. With bump motion, the suspension linkages control the secondary upright 103 to deliver wheel assembly camber change and track change / roll centre migration, while constraining its steer motion.

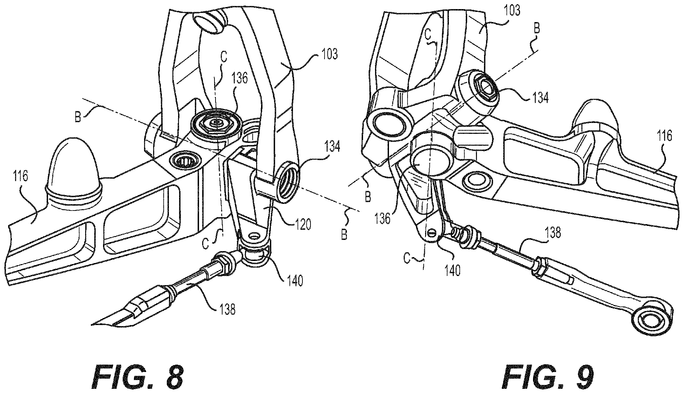

The mounting structure 120 is joined between the lower control arm 116 and the secondary upright 103 with a cylindrical joint 134 having an axis B-B that is substantially parallel to the vehicle longitudinal axis, as is shown in Figures 8 and 9. This axis permits camber motion while constraining steer motion. The mounting structure 120 connects to the lower control arm 116 via a second cylindrical joint 136 with a substantially vertical axis C-C, which comes into play during lateral retraction of the suspension system. The mounting structure 120 is controlled in steer (rotation about its vertical axis C-C) by a toe link 138, to which it is connected via a spherical joint 140. The lower control arm 116 is pivotally connected to the body via a spherical joint 141.

During normal suspension travel, the lower control arm 116, toe link 138, mounting structure 120, and stowage arm 118 do not move relative to one another, effectively forming a single lower arm assembly 114, the body mounts of the lower control arm 116, toe link 138, and stowage arm 118 lying along a single straight line about which the lower arm assembly articulates in suspension motion. The lower arm assembly 114 controls the position of the secondary upright 103 in all respects other than camber (rotation about the horizontal axis B-B of the mounting structure 120), which is governed in cooperation with the upper control arm 122. Under normal suspension motion, the system is similar to a double wishbone, or lower H-arm with upper link.

The relationship of the components in the lower arm assembly 114 provides for lateral stowage of the system to reduce drag while in flight. In addition to vertical retraction of the wheel and tyre 110 to a point higher than that seen in on-road use, the suspension system also draws the wheel inboard. While doing so, the suspension components remain at substantially the same steer orientation relative to the vehicle body. Hence, an approximately parallel motion is described by the lower control arm 116 and toe link 138, controlling secondary upright motion. The upper control arm 122 and steering track rod 128 are configured to move in sympathy with this action, so that parasitic camber of the wheel / fairing assembly and steer of the wheel 110 are minimised.

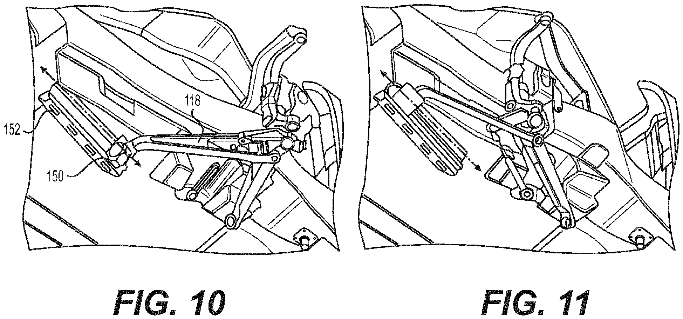

Control of the stowage action is achieved through substantially fore and aft motion of the inboard mount/carriage 150 of the stowage arm 118 along a rail system 152, as is shown in Figures 10 - 14. The stowage arm 118 is connected to the carriage by a cylindrical joint 154. The stowage arm 118 joins to the lower control arm 116 by a cylindrical joint 156. This provides rotational constraint to the to lower control arm 116 about its own axis, and hence pitch constraint to the mounting structure 120 and secondary upright 103. The carriage 150 is provided with actuation means for the sliding motion, and for latching at its extremes of motion.

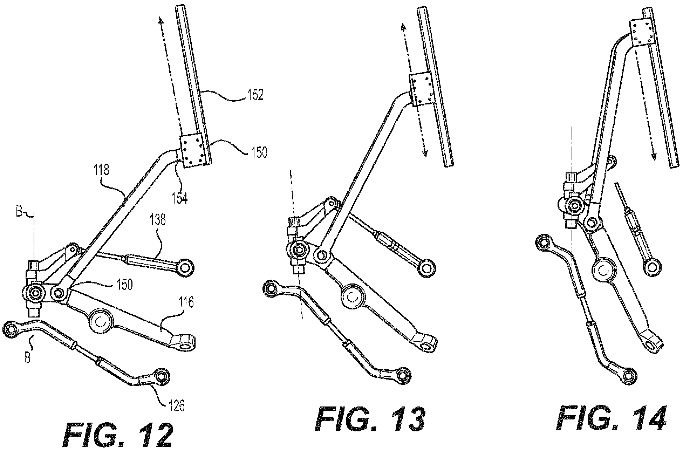

When the carriage 150 is at the end of the rail 152 closest to the lower control arm, the upright assembly (not shown) will be at its furthest lateral extent from the body (Figure 12). As the carriage 150 moves forward along the rail 152, the upright assembly is drawn towards the body (Figure 13), until the carriage 150 reaches the forward most end of the rail 152, at which time the wheel will be fully retracted into the body (Figure 14). The toe link 138 ensures that axis B-B of the mounting structure 120 remains substantially parallel to the vehicle axis, and the lower control arm 116 and track rod 126 remain substantially parallel through the movement such that steering direction does not change.

Springing and damping forces are transmitted to the secondary upright 103 through a pushrod assembly 142. The pushrod assembly 142 comprises a pushrod 144, that is pivotally connected at one end to the secondary upright 103 via a spherical joint 145, that transmits force and motion to a rocker 146 at the other end via a spherical/elastomeric joint 147. The rocker 146 is, in turn, connected to an inboard spring and damper unit 148 via a spherical joint 149.. The spring function is achieved by compressing a gas volume within the unit 148. Variation in ride height is achieved through altering the mass of gas within the unit 148 from a separate source (not shown). Damping is by conventional hydraulic means within the same unit.

The rocker 146 is also connected to the body by mounting 151 including a revolute joint or bearing. Thus the dimensions of the rocker 146 in relation to the positions of the joints 147, 149, and 151 define the motions and any mechanical advantage transmitted between the pushrod 144 and the spring/damper unit 148.

The mounting 151 also includes a secondary upright retention system for in-flight location of the wheel and fairing assembly. A hook 160 machined into the inner surface of the secondary upright 103 engages with a roller 162 on the mounting 151, providing positive latching location.

The upper control arm 122 is pivotally connected to the body via a universal joint 158 at its inner end, and to the secondary upright 103 via a spherical joint 163 at its outer end, allowing the use of a cranked structure with a centre of mass off the axis joining the joint centres.

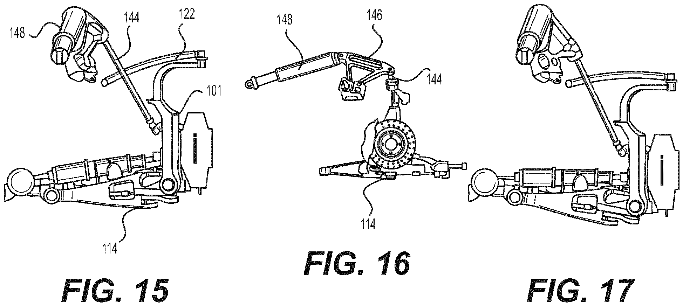

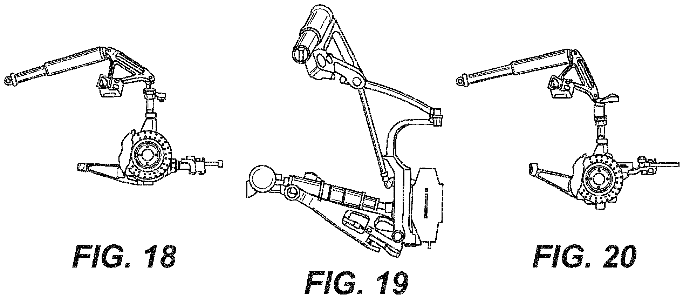

The range of vertical positions is shown in Figures 15 - 20. Figures 15 and 16 show the system at full road compression (full bump), which is essentially the same position as when the wheel is fully retracted by withdrawing gas from the spring/damper unit 148. Figures 17 and 18 show the wheel in an intermediate position for normal road use height. By extending the spring/damper unit 148 still further, the push rod 144 forces the upright assembly 101 down so that the wheel (not shown) can be extended vertically for take-off and landing as is shown in Figures 19 and 20. The lower arm assembly 114 and the upper control arm 122 ensure that the upright assembly 101 remains in substantially the same vertical alignment through the range of movements such that the camber of the wheel is not affected by the change of vertical position.

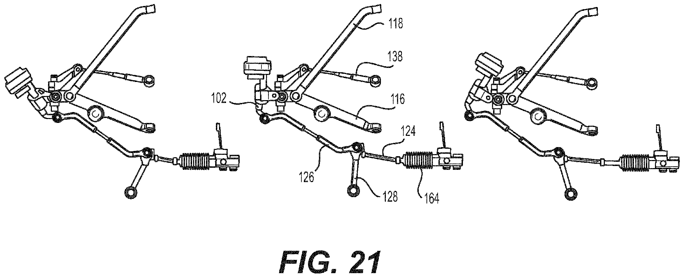

The steering track rod 126 is connected to a steering idler 128, which in turn is driven by the steering rack 164 via a second link 124 as is shown in Figure 21. This protects the steering rack 164 from the bending loads that would be imparted by the angled track rod 128. In the fully stowed condition (Figures 14, 15, and 16), a small degree of steer remains in the case of an emergency gear-up landing.

The wheel fairing 27 is attached to the secondary upright 103 in two places: where the upper control arm 122 is connected, and with a lower stay 166, which wraps around the wheel 110 at hub centre height. Thus the wheel 110 is free to turn under steering while the fairing 27 will remain parallel to the body, as is shown in Figures 16 and 17.

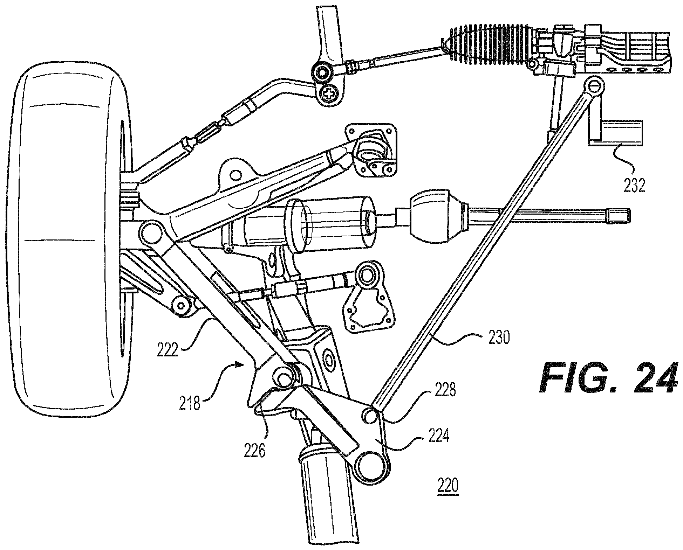

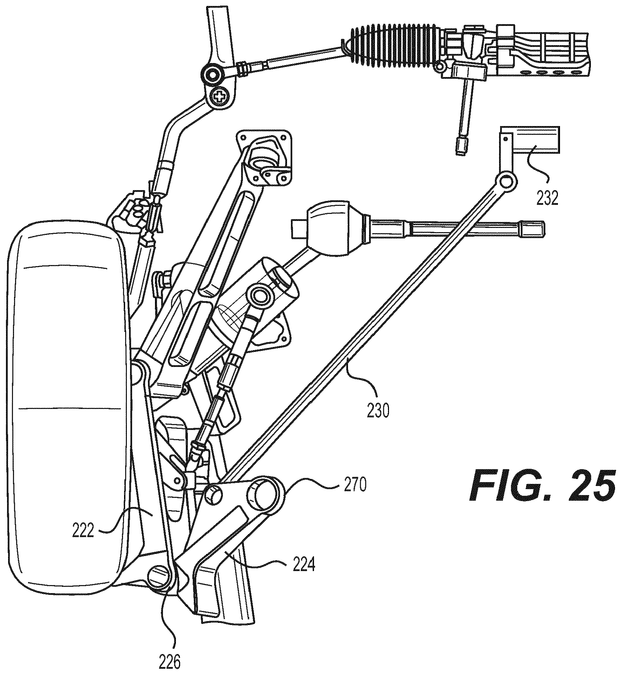

Figures 24 and 25 show an alternative embodiment of the stowage arm. In this case, instead of the arm 118, carriage 150 and rail 152 described above, the stowage arm 218 is pivotally connected at a fixed point 220 at its inboard end. The arm 218 is formed in two parts, an outer part 222, and an inner part 224 with a pivot connection 226 joining the two parts. The inner part 224 includes a connection 228 for an actuator rod 230 connected to a drive mechanism 232. In the position shown in Figure 24, the drive mechanism 232 pulls on the actuator rod 230, holding the two arm parts 222, 224 in an extended configuration. Operating the drive mechanism 232to push on the actuator rod 230 causes the inner part 224 to pivot around its inboard end 220, folding the arm at the pivot 226 and drawing the wheel inwardly towards the body. Extending the wheel is the reverse of this procedure.

Various other changes can be made while remaining within the scope of the invention.

## Claims

1. A wheel suspension system for mounting a wheel on a vehicle body, the system comprising:
an upright assembly for mounting the wheel;
a lower arm assembly comprising:
a lower control arm; and
a storage arm;
a mounting structure connecting the lower arm assembly to the upright assembly;
an upper control arm; and
an adjustable suspension assembly pivotally connected to the upright assembly or lower control arm assembly and pivotally connected to the body;
wherein
one end of the lower control arm is pivotally connected to the body, and the other end of the lower control arm is connected to the mounting structure to be pivotable about a first axis;
the mounting structure is connected to the upright assembly to be pivotable about a second axis that is substantially perpendicular to the first axis;
the storage arm is pivotally connected to the lower control arm at one end, and is moveably connected to the body under control of an actuator at the other end; and
the upper control arm having a pivot connection to an upper part of the upright assembly at one and, and a pivot connection to the body at the other end; and
wherein the lateral position of the upright assembly with respect to the body is adjustable by movement of the actuator of the storage arm with respect to the body, and the vertical position of the upright assembly with respect to the body is adjustable by operation of the adjustable suspension assembly.

2. A system as claimed in claim 1, wherein the upright assembly comprises a steerable upright on which the wheel is mounted, and a secondary upright, the steerable upright being pivotally mounted on the secondary upright.

3. A system as claimed in claim 1 or 2, wherein the first axis is a substantially vertical axis, and the second axis is a substantially horizontal axis.

4. A system as claimed in claim 1, 2, or 3, further comprising a link arm that is pivotally connected to the body at one end, and to the mounting structure at the other end.

5. A system as claimed in any preceding claim, wherein the adjustable suspension assembly comprises a pushrod and an adjustable spring and damper connected between the pushrod and the body.

6. A system as claimed in claim 5, wherein the pushrod assembly further comprises a rocker pivotally connected to the body, the adjustable spring and damper being connected on one side of the rocker, and the pushrod being connected on an opposite side of the rocker.

7. A system as claimed in any preceding claim, further comprising a latching mechanism for holding the upright assembly in a fixed position with respect to the body.

8. A system as claimed in any preceding claim, wherein the storage arm is pivotally connected to the lower control arm at one end, and has a slideable pivot connection to the body at the other end, the slideable pivot connection being moveable longitudinally with respect to the body; and wherein the lateral position of the upright assembly with respect to the body is adjustable by movement of the slideable pivot connection of the storage arm with respect to the body.

9. A system as claimed in claim 8, wherein the slideable pivot connection comprises:
a rail connected to the body extending in a longitudinal direction,
a carriage slideably mounted on the rail and providing the pivot connection for the stowage arm, and
an actuator for moving the carriage along the rail.

10. A system as claimed in claim 9, wherein the rail extends ahead of the wheel on the body.

11. A system as claimed in any of claims 8 - 10, wherein the upright assembly is moveable between a first position that is laterally extended with respect to the body and vertically lowered with respect to the body, and a second position is laterally retracted with respect to the body and vertically raised with respect to the body;
wherein, when the upright assembly is in the first position, the lower arm assembly is in a first configuration in which the slideable pivot connection is closer to the pivot connection of the lower control arm, and the pushrod is extended, and when the upright assembly is in the second position, the lower arm assembly is in a second configuration in which the slideable pivot connection is further from the pivot connection of the lower control arm, and the pushrod is retracted.

12. A system as claimed in claim 11, wherein the upright assembly is moveable to an intermediate position between the first and second positions.

13. A system as claimed in any of claims 1 - 7, wherein the storage arm comprises an inner part and an outer part connected by means of a hinge, the inner part including a connection to an actuator rod of an actuator mechanims; wherein operation of the actuator mechanism to a first position holds the arm in a straight configuration to exented the upright assembly laterally from the body, and operation of the actuator mechanism to a second position flods the storage arm to move the upright aseembly laterally towards the vehicle body.

14. A vehicle configurable for air or road use, comprising:
a body;
a pair of road wheels located on either side of a front region of the body, each wheel being mounted on the body by means of a suspension system according to any preceding claim and moveable between a first configuration in which the wheels are positioned close to the body for air use, and a second configuration in which the wheels are extended laterally from the body for supporting the body when configured for road use, the spacing between the wheels being greater in the second configuration than in the first configuration.

15. A vehicle as claimed in claim 14, further comprising foldable wings that are moveable between an extended position for air use, and a retracted position for road use.

16. A vehicle as claimed in claim 14 or 15, further comprising one or more drive motors connected to provide traction drive to the wheels, wherein the one or more drive motors are connected to the wheels by means of drive shaft extending through the upright assemblies.

17. A vehicle as claimed in claim 14, 15 or 16, wherein the suspension system is configurable into any of:
a first position in which the wheels are laterally extended with respect to the body and vertically lowered with respect to the body to place the vehicle in an attitude for take off or landing,
an intermediate position in which the wheels are laterally extended with respect to the body and vertically lowered with respect to the body to place the vehicle in an attitude for road use; and
a second position in which the wheels are laterally retracted with respect to the body and vertically raised with respect to the body for air use.
